# EUROPÄISCHE PATENTSCHRIFT

(11) **EP 3 436 202 B1**
(45) Veröffentlichungstag und Bekanntmachung des Hinweises auf die Patenterteilung: **20.07.2022**
(21) Anmeldenummer: 17712976.4
(22) Anmeldetag: 22.03.2017
(51) Int. Cl.: B04C 5/187, B04C 9/00

(54) **SPÄNEABSAUGANLAGE**
CHIP EXTRACTION SYSTEM
INSTALLATION D'ASPIRATION DE COPEAUX

(30) Priorität: 01.04.2016 DE 102016105978
(43) Veröffentlichungstag der Anmeldung: 06.02.2019
(73) Patentinhaber: Rattunde AG, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/EP2017/056846
(87) Internationale Veröffentlichungsnummer: WO 2017/167621

(56) Entgegenhaltungen:
- DE-A1- 10 321 438
- JP-B2- 2 964 388
- JP-U- S5 926 438
- US-A1- 2005 242 007

## Beschreibung

Die Erfindung betrifft eine Späneabsauganlage zur kontinuierlichen Späneentsorgung. Die Erfindung betrifft auch ein Verfahren zum Absaugen von Spänen.

Beim Bearbeiten von Materialien, insbesondere Rohren und Metallrohren, fallen bei verschiedenen Arbeitsschritten Späne an. Beispielsweise werden beim Zersägen der Rohre Metallspäne erzeugt, aber ebenso werden beim Anfasen Späne erzeugt. Des Weiteren können auch beim Zersägen von Kunststoffteilen, insbesondere Kunststoffrohren, Späne erzeugt werden. Entsprechendes gilt auch für das Zersägen von Holzteilen. Üblicherweise sind an verschiedenen Positionen der Bearbeitungsmaschinen Absauganlagen vorgesehen, die die bei dem jeweiligen Bearbeitungsschritt anfallenden Späne absaugen.

Aus der DE 10 2013 207 928 A1 ist eine Sägevorrichtung mit einer Sägeeinheit und einer Absaugeinheit zum Absaugen von bei Betrieb der Sägeeinheit anfallendem Sägeabfall bekannt. Zudem umfasst die Absaugeinheit eine Verpresseinheit zum Verpressen des mittels der Absaugeinheit abgesaugten Sägeabfalls.

Aus der DE 32 39 542 A1 ist eine Brikettierpresse für Biostoffe und Abfallprodukte bekannt, wobei einem Kolbenpresskanal eine Presszange nachgeschaltet ist, die in Rohrteile längstgeteilt ist, wobei die Rohrteile mittels Druckvorrichtungen radial betätigbar sind.

In der DE 40 27 583 A1 ist eine Vorrichtung zum Pressen von Strangteilen beschrieben, bei der ein stufenförmig ausgebildeter Füll- und Pressraum vorgesehen ist.

Aus der JPH 09156709 ist eine Müllverdichtungsanlage mit einer Schnecke bekannt, die zur Verdichtung von Hausmüll geeignet ist.

In der JP S59 26438 U ist eine Müllverdichtungsanlage mit einem im Durchmesser konstanten Müllabführrohr bekannt und in der US 2005/0242007 A1 ist ein Zentrifugalabscheider bekannt, bei dem zerkleinerter Müll nach Gewicht getrennt wird.

Im Stand der Technik gibt es unterschiedliche Absauganlagen. Zum Beispiel kann der Absaugstrom durch einen Filter geführt werden, in dem die Späne aufgefangen werden. Der Filter muss von Zeit zu Zeit ausgewechselt werden. Dazu wird die Maschine ausgeschaltet, der verschmutzte Filter herausgenommen und durch einen sauberen Filter ersetzt.

Es ist auch bekannt, Späne in einem Behälter zu sammeln, bis der Behälter voll ist. Da die Späne üblicherweise durch das Erzeugen eines Unterdrucks abgesaugt werden, kann der Behälter jedoch nicht ohne weiteres im Unterdruckraum ausgetauscht werden, sondern es muss die Maschine bzw. die Absauganlage ausgeschaltet werden, der Behälter aus dem Unterdruckraum entnommen und durch einen leeren Behälter ersetzt werden.

Bei den bekannten Absauganlagen entsteht grundsätzlich das Problem, dass eine Sogwirkung durch die Erzeugung eines Unterdrucks zustande kommt und die Sägespäne dann in den Bereich des Unterdrucks hineingesaugt werden. Dort werden sie grundsätzlich gesammelt, und zur Entnahme der Späne aus dem Unterdruckbereich muss die Absauganlage ausgeschaltet werden, da bei einer Entnahme während des Betriebes der Unterdruck zusammenbrechen würde.

Es ist daher Aufgabe der vorliegenden Erfindung, eine Absauganlage für Späne zur Verfügung zu stellen, mit der die Späne kontinuierlich während des Betriebes der Absauganlage entsorgt werden können. Es ist auch Aufgabe der vorliegenden Erfindung, ein Verfahren zum Absaugen von Spänen zur Verfügung zu stellen, in dem die Späne kontinuierlich während des Betriebs der Anlage entsorgt werden können.

Die Aufgabe wird in ihrem ersten Aspekt durch eine Späneabsauganlage mit den Merkmalen des Anspruchs 1 erfüllt.

Die erfindungsgemäße Späneabsauganlage saugt fortwährend Späne aus einem Arbeitsbereich einer Arbeitsmaschine, insbesondere einer Rohrschneidemaschine, Rohrsägemaschine oder von vor und hinter der Rohrsägemaschine angeordneten Bearbeitungsstationen ab. Die erfindungsgemäße Späneabsauganlage ist insbesondere für das Absaugen von Metallspänen, aber auch Kunststoffspänen bestimmt. Bei bevorzugten Metallprofilen, wie Metallrohren, fallen insbesondere Metallspäne an. Die Späneabsauganlage eignet sich aber auch zum Absaugen von Kunststoff- oder Holzspänen. Bei den abgesaugten Spänen handelt es sich insbesondere um vorzugsweise metallische Bröckelspäne, Spiralspäne, Wendelspäne, Wirrspäne oder Bandspäne. Die Spanformen können einzeln auftreten; es ist aber auch denkbar, dass die verschiedenen Spanformen gemeinsam oder in verschiedenen Gruppierungen auftreten können. Es handelt sich dabei um Späne, die ineinander verhaken können und insbesondere bei Metallspänen eine große zusammenhängende Spanansammlung bilden können, die zwar in sich beweglich ist, aber dennoch schlecht handhabbar und nur unter mitunter erheblicher Kraftaufwendung verformbar ist.

Die Erfindung umfasst auch eine Rohrschneidemaschine mit der erfindungsgemäßen Späneabsauganlage für insbesondere metallische Späne.

Die erfindungsgemäße Späneabsauganlage umfasst ein Späneabsaugrohr, das einen Eingang im Bereich des Späneanfalls, dem Arbeitsbereich, aufweist und das in einen Unterdruckraum mündet, der mit dem Späneabsaugrohr luftleitend in Verbindung steht und durch den Unterdruck Luft durch das Späneabsaugrohr ansaugt und dabei die im Arbeitsbereich anfallenden Späne durch den sich ausbildenden Luftstrom in den Unterdruckraum einsaugt.

In dem Unterdruckraum kann auf verschiedene Weise ein Unterdruck ausgebildet werden. Es ist jedoch vorgesehen, dass die angesaugten Späne zu einem Boden, d. h. in Richtung des Erdbodens fallen und sich am Boden des Unterdruckraumes sammeln. Insbesondere darf daher ein sich im Unterdruckraum ausbildender Luftstrom zur Erzeugung des Unterdruckes nicht so groß sein, dass er die angesaugten Späne entgegen der Erdanziehungskraft mitnimmt.

Die Späneabsauganlage umfasst ein Späneabgaberohr, das einen am Boden des Unterdruckraumes angeordneten Einlass und einen außerhalb des Unterdruckraumes angeordneten Auslass aufweist, wobei eine Innenquerschnittsfläche des Späneabgaberohres zwischen dem Einlass und dem Auslass zunimmt.

Es ist wenigstens eine Späneeindrückeinrichtung vorgesehen, die am Einlass angeordnet ist und die am Boden gesammelten Späne in den Einlass hineindrückt.

Sowohl die Späneeindrückeinrichtung als auch das Späneabgaberohr können auf verschiedene Weise ausgebildet sein. Es ist jedoch in jedem Fall vorgesehen, dass das Späneabgaberohr zumindest entlang eines Abschnittes vorzugsweise über die gesamte Länge seiner Ausdehnung eine freie Innenquerschnittsfläche aufweist, die vom Einlass in Richtung des Auslasses zunimmt.

Das Späneabgaberohr kann im Querschnitt abschnittsweise oder über seine gesamte Längsausdehnung kreisförmig ausgebildet sein, so dass sich in diesem Fall ein Radius bzw. Durchmesser des Späneabgaberohres abschnittsweise oder entlang der gesamten Ausdehnung des Späneabgaberohres stetig vergrößert. Durch die Vergrößerung der Innenquerschnittsfläche des Späneabgaberohres werden die durch die Späneeindrückeinrichtung in das Späneabgaberohr hineingedrückten Späne daran gehindert, aus dem Einlass wieder herauszurutschen oder -fallen, obwohl der Einlass mit dem Unterdruckraum in luftleitender Verbindung steht und auch am Einlass des Späneabgaberohres ein Unterdruck besteht. Der Unterdruck ist jedoch nicht so groß, dass er eine in das Späneabgaberohr hineingedrückte, in sich verhakte Spanwurst, die sich zum Auslass hin verbreitert, zurücksaugen könnte. Dazu ist die Spanwurst zu wenig verformbar. Vorzugsweise ist es vorgesehen, dass das Späneabgaberohr aus Rohrabschnitten mit jeweils einer gleichbleibenden Querschnittsfläche zusammengesetzt ist und die eigenen Querschnittsflächen vom Einlass zum Auslass hin stufenweise zunehmen. Es ist jedoch auch denkbar, dass das Späneabgaberohr eine sich konisch, d. h. kontinuierlich vergrößernde Innenquerschnittsfläche aufweist. Dadurch wird in dem Späneabgaberohr ein Spänekonus erzeugt, der nur in Richtung des Auslasses aus dem Abgaberohr herausbefördert werden kann. Die Vorrichtung eignet sich insbesondere zum Transport von Metallspänen, aber auch von Kunststoffspänen. Insbesondere bei den bevorzugten Metallspänen ist es jedoch vorgesehen, dass diese sich durch das Eindrücken mittels der Späneeindrückeinrichtung im Späneabgaberohr verhaken und sich in ihrer konischen Form dem Späneabgaberohr anpassen und gleichsam wie ein Pfropfen im Späneabgaberohr festsitzen. Das Späneabgaberohr kann eine Länge von durchaus einem Meter und einen Durchmesser am Einlass von 100 mm und am Auslass von 150 mm aufweisen. Es sind aber auch andere Maße denkbar.

Durch das Eindrücken der Späne in das Späneabgaberohr wird eine freie Innenquerschnittsfläche des Späneabgaberohres verringert, wodurch insbesondere ein Luftstrom vom Auslass in Richtung des Einlasses, also entgegen der Transportrichtung der Späne, verringert und beinahe vollständig unterbunden wird, so dass der im Unterdruckraum sich ausbildende Unterdruck stabil aufrechterhalten werden kann, obwohl fortwährend Späne vom Einlass in Richtung des Auslasses abtransportiert werden.

Am Boden der Späneabsauganlage ist eine Vertiefung vorgesehen, in der die Späneeindrückeinrichtung wirkt und an der der Einlass des Späneabgaberohres angeordnet ist. Vorzugsweise ist es vorgesehen, dass der Auslass des Späneabsaugrohres an einer Außenwandung des Unterdruckraumes tangential angeordnet ist, so dass die durch das Späneabgaberohr abgesaugten Späne spiralförmig im Unterdruckraum rotieren und sich in einer Rotationsbewegung im Zentrum des Bodens des Unterdruckraumes sammeln. Im Bereich des Zentrums des Bodens des Unterdruckraumes ist eine Vertiefung vorgesehen. Die Späne sammeln sich schon durch ihre Rotationsbewegung vorzugsweise im Zentrum des Bodens und damit in der Vertiefung. Sie werden dort jedoch zusätzlich von der Späneeindrückeinrichtung in den Einlass hineingedrückt, der ebenfalls in der Vertiefung angeordnet ist. Die Vertiefung kann in den Boden eingelassen sein, und unter dem Boden kann sowohl die Späneeindrückeinrichtung als auch der Einlass des Späneabgaberohres vorgesehen sein.

Die Späneeindrückeinrichtung weist einen Pumpzylinder auf, der horizontal in die Vertiefung wirkt und der die in der Vertiefung angesammelten Späne in den Einlass hineindrückt. Der Pumpzylinder ist vorzugsweise pneumatisch angetrieben.

Die Späneeindrückeinrichtung weist einen Stopfzylinder auf, der diagonal oberhalb der Vertiefung angeordnet ist und die Späne in die Vertiefung hineindrückt.

Pumpzylinder und Stopfzylinder arbeiten vorzugsweise miteinander zusammen, und zwar derart, dass der Stopfzylinder zunächst die Späne in die Vertiefung drückt und die leicht zusammengedrückten Späne dann mittels des Pumpzylinders in den Einlass des Späneabgaberohres hineingedrückt werden. Die Taktung des Stopfzylinders und die des Pumpzylinders sind versetzt zueinander angeordnet. Eine Hubbewegung des Stopfzylinders und eine des Pumpzylinders wirken jedoch in einem gemeinsamen Arbeitstakt zusammen. Diese Arbeitstakte können kurz hintereinander ausgeführt werden oder auch in Zeitabständen von mehreren Sekunden nacheinander ausgeführt werden.

In einer besonders bevorzugten Ausführungsform der Erfindung weist der Pumpzylinder teleskopartig ineinandergesteckte einzelne Pumpzylinder bzw. -rohre auf, die günstigerweise separat gesteuert werden können.

Der Pumpzylinder weist einen horizontal in Richtung des Einlasses beweglichen Kolben auf, der einen Außendurchmesser aufweist, der geringer ist als ein Innendurchmesser des Einlasses, so dass der Kolben des Pumpzylinders in den Einlass des Späneabgaberohres hineingedrückt werden kann. Er kann vorzugsweise mehrere Zentimeter, d. h. bis zu 10 cm oder 15 cm oder jede Distanz zwischen diesen beiden Entfernungen in das Späneabgaberohr hineingedrückt werden und somit die Späne tief in das Späneabgaberohr hineindrücken. Um ein Verklemmen des Pumpzylinders innen im Einlass zu verhindern, ist ein relativ großer Spalt zwischen Kolbenaußenwandung und Einlassinnenwandung vorgesehen. Die Spaltbreite weist jedoch vorzugsweise in Abhängigkeit von den Spänen, die abgefördert werden, unterschiedliche Spaltbreiten auf. Insbesondere bei sehr langen Spiralspänen würde sich sonst der Kolben durch Einklemmen von Spänen im Einlass verklemmen. Daher ist es günstigerweise vorgesehen, dass der Pumpzylinder mehrere teleskopartig ineinandergeschachtelte Pumpzylinder aufweist, wobei der innerste Pumpzylinder eine tatsächliche Zylinderform aufweist und die ihn umgebenden Rohrzylinder tatsächlich rohrförmig ausgebildet sind. Durch diese Ausbildung des Pumpzylinders kann der Außendurchmesser des Pumpzylinders den durch die Späne gestellten Erfordernissen angepasst werden.

Die Erfindung wird in ihrem zweiten Aspekt durch ein Verfahren mit den Merkmalen des Anspruchs 7 gelöst. Das Verfahren eignet sich insbesondere zur Durchführung mit einer der oben beschriebenen Späneabsauganlagen.

Auch das Absaugverfahren kann Teil eines Verfahrens zur Bearbeitung von Rohrabschnitten, insbesondere Metallrohrabschnitten, mittels einer Rohrschneidemaschine sein.

In dem erfindungsgemäßen Verfahren wird in einem Unterdruckraum ein Unterdruck erzeugt, und dadurch werden Späne durch ein Späneabsaugrohr in den Unterdruckraum angesaugt. In dem Unterdruckraum fallen die angesaugten Späne in Richtung des Erdbodens zum Boden des Unterdruckraums. Die herabgefallenen Späne werden mit einer Späneandrückeinrichtung in einen am Boden angeordneten Einlass eines Späneabgaberohres gedrückt, wobei eine Innenquerschnittsfläche des Späneabgaberohres zwischen dem Einlass und dem Auslass zunimmt und die in das Späneabgaberohr eingedrückten Späne aus dem außerhalb des Unterdruckraumes angeordneten Auslass herausgedrückt werden.

Auch hinsichtlich des Verfahrens hat es sich überraschend gezeigt, dass ohne Unterbrechung des Absaugens der Späne eine kontinuierliche Spanentsorgung stattfinden kann, ohne die Absauganlage auszuschalten, weil die Späne aus dem Unterdruckraum herausbefördert werden können, ohne dass der Unterdruckraum geöffnet werden muss, indem die Späne selbst während des Abtransportes das Späneabgaberohr verschließen, zumindest zu 99 % verschließen, indem sie mit der Späneeindrückeinrichtung in das Späneabgaberohr hineingedrückt werden. Darüber hinaus wird einem Zurücksaugen der Spanwurst bzw. des Spanpfropfes im Späneabgaberohr dadurch entgegengewirkt, dass sich der Innenquerschnitt des Späneabgaberohres vergrößert, so dass die Spanwurst bei Bewegung in Richtung des Einlasses festklemmt.

Die Späne sammeln sich am Boden in einer Vertiefung und werden mittels eines Stopfzylinders in die Vertiefung hineingestopft und danach mittels eines Pumpzylinders aus der Vertiefung in den Einlass hineingestopft.

Längen und Durchmesser des Späneabgaberohres sind so bemessen, dass ein Luftdurchtritt vom Auslass in Richtung des Einlasses bei vollgefülltem und vollgestopftem Späneabgaberohr nur noch in sehr geringem Maße möglich ist, so dass der Unterdruck im Unterdruckraum aufrechterhalten bleibt. Günstigerweise ist im Unterdruckraum ein Absauggebläse oberhalb des Späneabgaberohres vorgesehen, mit dem Luft aus dem Unterdruckraum durch einen Filter nach außen gepustet wird und dadurch ein Unterdruck erzeugt wird.

Die Erfindung wird anhand von zwei Ausführungsbeispielen in zwei Figuren beschrieben. Dabei zeigen:
- Fig. 1: eine erste Ausführungsform der erfindungsgemäßen Späneabsauganlage
- Fig. 2: eine zweite Ausführungsform der erfindungsgemäßen Späneabsauganlage

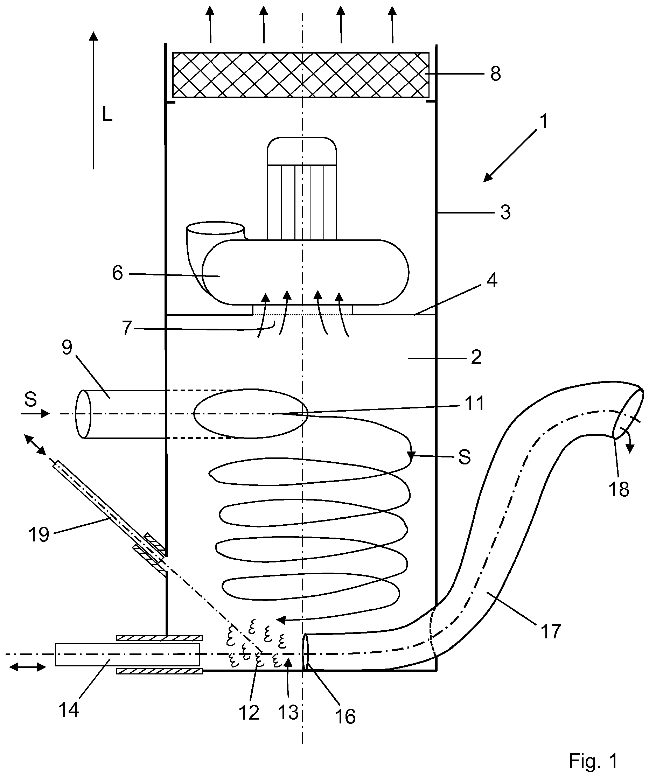

In Fig. 1 ist eine Späneabsauganlage 1 mit einem Unterdruckraum 2 dargestellt, der Teil eines Gehäusezylinders 3 ist, in dem innen ein Zwischenboden 4 eingebracht ist. In dem Zwischenboden 4 ist zentral wiederum ein Absauggebläse 6 angeordnet, das Luft aus dem Unterdruckraum 2 durch eine Öffnung 7 im Zwischenboden 4 hindurch nach oben absaugt und durch einen Filter 8 ausbläst. Durch das Aussaugen der Luft wird im Unterdruckraum 2 ein Unterdruck erzeugt. Dieser Unterdruck erzeugt einen Luftstrom S durch ein tangential am Unterdruckraum 2 angeordnetes Späneabsaugrohr 9. Das Späneabsaugrohr 9 weist einen nicht dargestellten Einlass auf, der sich im Bereich der Spanerzeugung befindet, und eine elliptische Mündung 11 in der Wandung des Unterdruckraumes 2. Durch den Luftstrom S durch das Späneabsaugrohr 9 hindurch wird ein rotierender Luftstrom S innen im Unterdruckraum 2 erzeugt, durch den abgesaugte Späne 12 mittransportiert werden. Aufgrund der Gewichtskraft fallen die Späne 12 in einer Rotationsbewegung in Richtung des Bodens des Unterdruckraumes 2. Im Boden des Unterdruckraumes ist eine Vertiefung 13 vorgesehen, die etwa zentral im Boden des Unterdruckraumes 2 angeordnet ist. Der Unterdruckraum 2 ist in einem Querschnitt senkrecht zu einer Längsrichtung L kreisförmig ausgebildet.

Die Vertiefung 13 kann in einer Draufsicht etwa rechteckig ausgebildet sein. Unterhalb der Vertiefung 13 ist zum einen ein Pumpzylinder 14 und zum anderen ein Einlass 16 eines Späneabgaberohres 17 vorgesehen. Mithilfe des Pumpzylinders 14 werden die in der Vertiefung 13 angesammelten Späne 12 in den Einlass 16 des Späneabgaberohres 17 gepresst. Das Späneabgaberohr 17 ist in etwa S-förmig ausgeformt. Es erweitert sich konisch, d. h. ein kreisförmiger Innenquerschnitt nimmt stetig vom Einlass 16 zu einem Auslass 18 hinzu. Die Länge des Späneabgaberohres 17 beträgt in diesem Ausführungsbeispiel etwa einen Meter. Ein Durchmesser des Einlasses 16 liegt bei 100 mm, und ein Durchmesser des Auslasses 18 liegt bei 150 mm.

Zusätzlich ist ein Stopfzylinder 19 vorgesehen, der diagonal oberhalb der Vertiefung 13 angeordnet ist und die am Boden sich rotierend bewegenden Späne 12 in die Vertiefung 13 hineinstopft. Von da aus können sie dann mittels des Pumpzylinders 14 in den Einlass 16 hineingestopft werden. Es ist eine (nicht dargestellte) Steuerung vorgesehen, die zunächst den Stopfzylinder 19 und kurz danach den Pumpzylinder 14 ansteuert. Der Stopfzylinder 19 führt eine kurze Hin-und-her-Bewegung aus, drückt die Späne 12 in die Vertiefung 13, und kurz anschließend führt der Pumpzylinder 14 eine Hin-und-her-Bewegung aus und drückt die Späne 12 in den Einlass 16 hinein. Dabei kann der Pumpzylinder 14 durchaus mehrere Zentimeter, beispielsweise zehn Zentimeter in den Einlass 16 des Späneabgaberohres 17 hineingedrückt werden. Je voller das Späneabgaberohr 17 mit Spänen gefüllt ist, desto weniger luftdurchlässig wird das Späneabgaberohr 17 entlang seiner inneren Längsausdehnung. Aufgrund der geringen Luftdurchlässigkeit des gefüllten Späneabgaberohres 17 ist es möglich, dass das Absauggebläse 6 trotz des kontinuierlichen Abtransportes der Späne 12 durch das Späneabgaberohr 17 hindurch einen Unterdruck im Unterdruckraum 2 aufrechterhält und somit kontinuierlich Späne 12 aus dem (nicht dargestellten) Arbeitsbereich absaugen kann. Unterhalb des Auslasses 18 des Späneabgaberohres 17 kann eine Kiste o. Ä. angeordnet werden, in der die austretende Spanwurst gesammelt wird.

Am Beginn des Absaugvorganges, wenn das Späneabgaberohr 17 noch nicht gefüllt ist, kann zunächst ein Deckel auf den Auslass 18 gesetzt werden, der einen Luftdurchtritt verhindert.

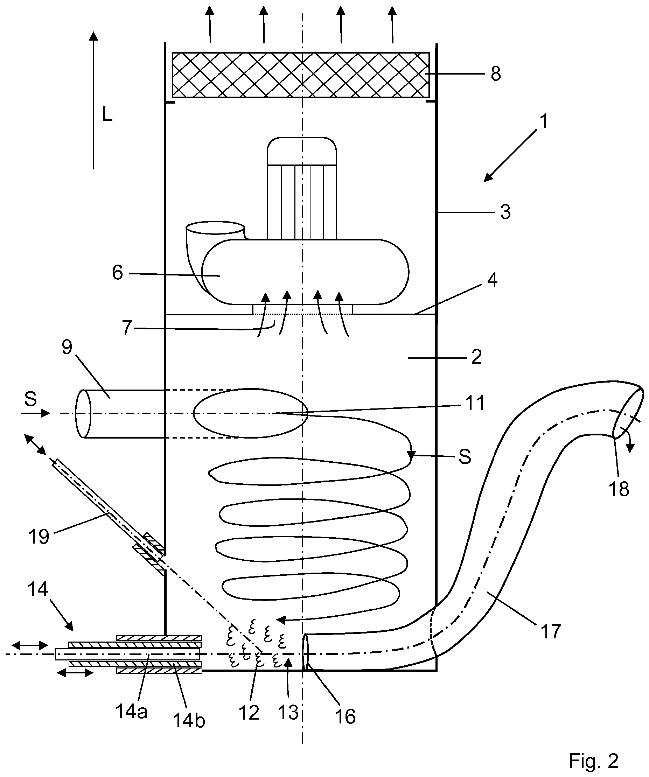

In Fig. 2 ist eine zweite Ausführungsform der Erfindung dargestellt. Diese unterscheidet sich von der ersten Ausführungsform nur in der Ausbildung des Pumpzylinders 14. In Fig. 1 ist der Pumpzylinder 14 als einstückiger zylindrischer Körper ausgebildet, während der Pumpzylinder 14 in Fig. 2 mehrteilig ausgebildet ist. Der Pumpzylinder 14 weist mehrere teleskopartig ineinander verfahrbare einzelne Pumpzylinder bzw. -rohre 14a, 14b auf. Durch entsprechende Steuerung ist es daher möglich, den Querschnitt des die Pumpbewegung tatsächlich ausführenden Pumpzylinders 14 den Erfordernissen, insbesondere der Spanart anzupassen. Problematisch bei dem Einstopfen der Späne 12 in den Einlass 16 ist es, dass sich der Pumpzylinder 14 im Einlass 16 des Späneabgaberohres 17 verklemmen kann. Daher sind erhebliche Spaltbreiten von etwa 1 cm oder sogar mehr erforderlich. Bei Spänen 12, die eine kurze Länge haben und nicht sehr gerade sind, können jedoch Spaltbreiten von unter 1 cm hinreichend sein. Diesen unterschiedlichen Erfordernisse an den Querschnitt des Pumpzylinders 14 kann durch die entsprechende Zur-Verfügung-Stellung von mehr oder weniger einzelnen Pumpzylindern bzw. -rohren 14a, 14b Rechnung getragen werden, die gemeinsam oder einzeln bewegt werden.

### Bezugszeichenliste

- 1: Späneabsauganlage
- 2: Unterdruckraum
- 3: Gehäusezylinder
- 4: Zwischenboden

- 6: Absauggebläse
- 7: Öffnung
- 8: Filter
- 9: Späneabsaugrohr

- 11: elliptische Mündung
- 12: Späne
- 13: Vertiefung
- 14: Pumpzylinder
- 14a: einzelner Pumpzylinder
- 14b: einzelnes Pumprohr
- 16: Einlass
- 17: Späneabgaberohr
- 18: Auslass
- 19: Stopfzylinder

- L: Längsrichtung
- S: Luftstrom

## Patentansprüche

1. Späneabsauganlage zur kontinuierlichen Späneentsorgung mit
einem Späneabsaugrohr (9), das in einen Unterdruckraum (2) mit einem Boden mündet, auf dem sich angesaugte Späne (12) sammeln,
einem Späneabgaberohr (17), das einen am Boden angeordneten Einlass (16) und einen außerhalb des Unterdruckraumes (2) angeordneten Auslass (18) aufweist, wobei eine Innenquerschnittsfläche des Späneabgaberohres (17) zwischen dem Einlass (16) und dem Auslass (18) zunimmt,
und wenigstens einer Späneeindrückeinrichtung (14, 19), die am Einlass (16) angeordnet ist und die am Boden gesammelte Späne (12) in den Einlass (16) hineindrückt,
**dadurch gekennzeichnet, dass** die Späneeindrückeinrichtung (14, 19) einen Pumpzylinder (14) aufweist, der horizontal in eine Vertiefung (13) wirkt und die in der Vertiefung (13) angesammelten Späne (12) in den Einlass (16) drückt, und die Späneeindrückeinrichtung (14, 19) einen Stopfzylinder (19) aufweist, der diagonal oberhalb der Vertiefung (13) angeordnet ist und die Späne (12) in die Vertiefung (13) hineindrückt.

2. Späneabsauganlage nach Anspruch 1,
**dadurch gekennzeichnet, dass** oberhalb der Mündung des Späneabsaugrohres (9) ein Absauggebläse (6) angeordnet ist, das den Unterdruck im Unterdruckraum (2) erzeugt und dessen Sog derart bemessen ist, dass die angesaugten Späne (12) im Unterdruckraum (2) zu einem Boden fallen.

3. Späneabsauganlage nach Anspruch 1 oder 2,
**dadurch gekennzeichnet, dass** der Einlass (16) des Späneabgaberohres (17) in der Vertiefung (13) am Boden angeordnet ist.

4. Späneabsauganlage nach einem der Ansprüche 1 bis 3,
**dadurch gekennzeichnet, dass** das Späneabgaberohr (17) aus Rohrabschnitten mit jeweils einer Querschnittsfläche zusammengesetzt ist und die Querschnittsflächen vom Einlass (16) zum Auslass (18) hin stufenweise zunehmen.

5. Späneabsauganlage nach einem der vorstehenden Ansprüche,
**dadurch gekennzeichnet, dass** der Pumpzylinder (14) teleskopartig ineinandergesteckte einzelne Pumpzylinder bzw. -rohre (14a, 14b) aufweist, die separat steuerbar sind.

6. Späneabsauganlage nach einem der vorstehenden Ansprüche,
**dadurch gekennzeichnet, dass** der Stopfzylinder (19) und der Pumpzylinder (14) nacheinander betätigbar sind.

7. Verfahren zum Absaugen von Spänen (12),
indem in einem Unterdruckraum (2) ein Unterdruck erzeugt wird und dadurch die Späne (12) durch ein Späneabsaugrohr (9) in den Unterdruckraum (2) gesaugt werden und die angesaugten Späne (12) im Unterdruckraum (2) zu einem Boden fallen, die herabgefallenen Späne (12) mit einer Späneeindrückeinrichtung (14, 19) in einen am Boden angeordneten Einlass (16) eines Späneabgaberohres (17) gedrückt werden und eine Innenquerschnittsfläche des Späneabgaberohres (17) zwischen dem Einlass (16) und einem Auslass (18) zunimmt, und die in das Späneabgaberohr (17) eingedrückten Späne (12) aus dem außerhalb des Unterdruckraumes (2) angeordneten Auslass (18) herausgedrückt werden, **dadurch gekennzeichnet, dass** sich die Späne (12) in einer Vertiefung (13) am Boden sammeln und mittels eines Stopfzylinders (19), der diagonal oberhalb der Vertiefung (13) angeordnet ist, in die Vertiefung (13) gestopft werden und danach mittels eines Pumpzylinders (14) aus der Vertiefung (13) in den Einlass (16) gestopft werden.

8. Verfahren nach Anspruch 7,
**dadurch gekennzeichnet, dass** sich die Späne (12) im Späneabgaberohr (17) soweit verdichten, dass sie eine freie Innenquerschnittsfläche des Späneabgaberohres (17) soweit verschließen, dass der Unterdruck im Unterdruckraum aufrechterhalten bleibt.

## Claims

1. Chip extraction system for the continuous disposal of chips, comprising
a chip extraction tube (9) which opens out into a vacuum chamber (2) with a base on which chips (12) collect that are sucked in,
a chip discharging tube (17), which has an inlet (16) arranged on the base and an outlet (18) arranged outside the vacuum chamber (2), wherein an inner cross-sectional area of the chip discharging tube (17) increases between the inlet (16) and the outlet (18),
and at least one chip forcing device (14, 19), which is arranged at the inlet (16) and forces the chips (12) that have collected on the base into the inlet (16),
**characterised in that** the chip forcing device (14, 19) has a pump cylinder (14) which acts horizontally into a depression (13) and forces the chips (12) collected in the depression (13) into the inlet (16) and the chip forcing device (14, 19) has a plugging cylinder (19) which is arranged diagonally above the depression (13) and forces the chips (12) into the depression (13).

2. Chip extraction system according to claim 1,
**characterised in that** above the mouth of the chip extraction tube (9) an extraction fan (6) is arranged which generates the vacuum in the vacuum chamber (2), the suction of this fan being such that the chips (12) which are sucked in fall to a base in the vacuum chamber (2).

3. Chip extraction system according to claim 1 or 2,
**characterised in that** the inlet (16) of the chip discharging tube (17) is arranged in the depression (13) on the base.

4. Chip extraction system according to one of claims 1 to 3,
**characterised in that** the chip discharging tube (17) is composed of tube sections each having a cross-sectional area and the cross-sectional areas increase in stages from the inlet (16) towards the outlet (18).

5. Chip extraction system according to one of the preceding claims, **characterised in that** the pump cylinder (14) has individual pump cylinders or tubes (14a, 14b) which are inserted telescopically into one another and are separately controllable.

6. Chip extraction system according to one of the preceding claims,
**characterised in that** the plugging cylinder (19) and the pump cylinder (14) can be actuated successively.

7. Method for extracting chips (12),
wherein a vacuum is generated in a vacuum chamber (2) and as a result the chips (12) are sucked through a chip extraction tube (9) into the vacuum chamber (2), and the chips (12) sucked in fall to a base in the vacuum chamber (2), the chips (12) which have fallen down are forced by a chip forcing device (14, 19) into an inlet (16) of a chip discharging tube (17) arranged on the base, and an inner cross-sectional area of the chip discharging tube (17) increases between the inlet (16) and an outlet (18), and the chips (12) forced into the chip discharging tube (17) are forced out of the outlet (18) arranged outside the vacuum chamber (2), **characterised in that** the chips (12) collect in a depression (13) on the base and are packed by means of a plugging cylinder (19), which is arranged diagonally above the depression (13), into the depression (13) and then are packed by means of a pump cylinder (14) out of the depression (13) into the inlet (16).

8. Method according to claim 7,
**characterised in that** the chips (12) are compressed in the chip discharging tube (17) to such an extent that they close a free inner cross-sectional area of the chip discharging tube (17) to such an extent that the vacuum in the vacuum chamber is maintained.

## Revendications

1. Installation d'aspiration de copeaux pour l'évacuation en continu de copeaux avec un tube d'aspiration des copeaux (9) qui débouche dans un espace de dépression (2) avec un fond sur lequel des copeaux aspirés (12) s'amassent, un tube d'évacuation des copeaux (17) qui présente une entrée (16) placée sur le fond et une sortie (18) placée à l'extérieur de l'espace de dépression (2), cependant qu'une surface de section intérieure du tube d'évacuation des copeaux (17) augmente entre l'entrée (16) et la sortie (18),
et au moins un dispositif d'enfoncement des copeaux (14, 19) qui est placé à l'entrée (16) et qui enfonce dans l'entrée (16) les copeaux (12) amasssés sur le fond,
**caractérisée en ce que** le dispositif d'enfoncement des copeaux (14, 19) présente un cylindre de pompe (14) qui agit horizontalement dans un renfoncement (13) et qui enfonce dans l'entrée les copeaux accumulés (12) dans le renfoncement et que le dispositif d'enfoncement des copeaux (14, 19) présente un cylindre de bourrage (19) qui est placé diagonalement au-dessus du renfoncement (13) et qui enfonce les copeaux (12) dans le renfoncement (13).

2. Installation d'aspiration de copeaux selon la revendication 1,
**caractérisée en ce qu'**une soufflante d'aspiration (6) est placée au-dessus de l'embouchure du tube d'aspiration des copeaux (9), soufflante qui produit la dépression dans l'espace de dépression (2) et dont la succion est dimensionnée telle que les copeaux accumulés (12) tombent dans l'espace de dépression (2) vers un fond.

3. Installation d'aspiration de copeaux selon la revendication 1 ou 2, **caractérisée en ce que** l'entrée (16) du tube d'évacuation des copeaux (17) est placée dans le renfoncement (13) sur le fond.

4. Installation d'aspiration de copeaux selon l'une des revendications 1 à 3, **caractérisée en ce que** le tube d'évacuation des copeaux (17) se compose de tronçons de tube avec respectivement une surface de section et que les surfaces de section augmentent graduellement de l'entrée (16) vers la sortie (18).

5. Installation d'aspiration de copeaux selon l'une des revendications précédentes,
**caractérisée en ce que** le cylindre de pompe (14) présente des cylindres ou des tubes de pompe individuels (14a, 14b) emboîtés de manière télescopique qui peuvent être commandés séparément.

6. Installation d'aspiration de copeaux selon l'une des revendications précédentes,
**caractérisée en ce que** le cylindre de bourrage (19) et le cylindre de pompe (14) peuvent être actionnés l'un après l'autre.

7. Procédé d'aspiration de copeaux (12), une dépression étant produite dans un espace de dépression (2) et les copeaux (12) étant ainsi aspirés dans l'espace de dépression (2) par un tube d'aspiration des copeaux (9) et les copeaux aspirés (12) tombant dans l'espace de dépression (2) vers un fond, les copeaux tombés (12) étant enfoncés avec un dispositif d'enfoncement des copeaux (14, 19) dans une entrée (16) placée sur le fond et une surface de section intérieure du tube d'évacuation des copeaux (17) augmentant entre l'entrée (16) et la sortie (18) et les copeaux (12) enfoncés dans le tube d'évacuation des copeaux (17) étant sortis par la sortie (18) placée en dehors de l'espace de dépression (2).
**Caractérisé en ce que** les copeaux (12) s'accumulent dans un renfoncement (13) sur le fond et sont bourrés dans le renfoncement (13) au moyen d'un cylindre de bourrage (19) qui est placé diagonalement au-dessus du renfoncement (13) et sont ensuite sortis du renfoncement (13) et bourrés dans l'entrée (16) au moyen du cylindre de pompe (14).

8. Procédé selon la revendication 7,
**caractérisé en ce que** les copeaux (12) se compactent dans le tube d'évacuation des copeaux (17) jusqu'à ce qu'ils ferment une surface de section intérieure libre du tube d'évacuation des copeaux (17) si bien que la dépression reste maintenue dans l'espace de dépression.
